# EUROPEAN PATENT APPLICATION

(11) **EP 4 254 380 A1**
(43) Date of publication of application: **04.10.2023**
(21) Application number: 21897739.5
(22) Date of filing: 11.11.2021
(51) Int. Cl.: G08G 1/00, B60W 30/165, B60W 40/04, G01S 7/02, G01S 13/34, G01S 13/931, G08G 1/16

(54) **ELECTRONIC APPARATUS, CONTROL METHOD FOR ELECTRONIC APPARATUS, AND PROGRAM**

(30) Priority: 25.11.2020 JP 2020195364
(71) Applicant: Kyocera Corporation, Kyoto-shi Kyoto 612-8501 (JP)
(72) Inventor: SAHARA Tooru, Kyoto-shi, Kyoto 612-8501 (JP); KURODA Jun, Kyoto-shi, Kyoto 612-8501 (JP); HOMMA Takuya, Kyoto-shi, Kyoto 612-8501 (JP); TONG Fangwei, Kyoto-shi, Kyoto 612-8501 (JP); YAMAMOTO Kenji, Kyoto-shi, Kyoto 612-8501 (JP)
(74) Representative: Viering, Jentschura & Partner mbB Patent- und Rechtsanwälte
(86) International application number: PCT/JP2021/041632
(87) International publication number: WO 2022/113765

(57) **Abstract**

An electronic device included in a mobility device includes a transmission antenna, a reception antenna, and a controller. The transmission antenna transmits a transmission wave. The reception antenna receives a reflected wave that is the transmission wave having been reflected. The controller detects an object, based on a transmission signal transmitted as the transmission wave and a reception signal received as the reflected wave. The controller determines whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

## Description

### CROSS-REFERENCE TO RELATED APPLICATIONS

This application claims priority from Japanese Patent Application No. 2020-195364 filed in Japan on November 25, 2020, the entire disclosure of which is incorporated herein by reference.

### TECHNICAL FIELD

The present disclosure relates to an electronic device, a method for controlling an electronic device, and a program.

### BACKGROUND OF INVENTION

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and receiving a reflected wave reflected off the object. Such a technology for measuring a distance or the like expectedly becomes more important in the future with progresses of a technology for assisting drivers in driving and an automated-driving-related technology for partially or entirely automating driving.

A technology related to "platooning (traveling in a platoon)" is attracting attention from the viewpoint of increased operation safety and/or increased operation efficiency of mobility devices such as trucks, for example. In the present disclosure, "platooning" indicates that multiple mobility devices such as trucks travel in a row, for example. A platooning technique, for example, a technique in which, when multiple trucks travel in a row, the multiple trucks perform communication to share travel states in real time and automatically keep an inter-vehicle distance. For example, an electronic connection technology (vehicle-to-vehicle communication) enables integral control of multiple trucks, and thus enables the multiple trucks to travel in a vehicle platoon. Examples of such a technology include Patent Literature 1 which discloses a vehicle control device that can implement platooning by performing vehicle-to-vehicle communication with other vehicles traveling around a vehicle including the vehicle control device. The examples of such a technology also include Patent Literature 2 which discloses a device that assists driving of multiple vehicles by platooning, based on information acquired from the vehicles.

### CITATION LIST

### PATENT LITERATURE

Patent Literature 1: Japanese Unexamined Patent Application Publication No. 2018-190273
Patent Literature 2: Japanese Unexamined Patent Application Publication No. 2014-153950

### SUMMARY

In one embodiment, an electronic device
is included in a mobility device, and includes a transmission antenna, a reception antenna, and a controller.

The transmission antenna transmits a transmission wave.

The reception antenna receives a reflected wave that is the transmission wave having been reflected.

The controller detects an object, based on a transmission signal transmitted as the transmission wave and a reception signal received as the reflected wave.

The controller determines whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

In one embodiment, an electronic device
is included in a mobility device, and includes a transmission antenna, a reception antenna, and a controller.

The transmission antenna transmits a transmission wave.

The reception antenna receives a reflected wave that is the transmission wave having been reflected.

The controller detects an object, based on a transmission signal transmitted as the transmission wave and a reception signal received as the reflected wave.

The controller outputs a detection result of an object approaching the mobility device when the mobility device is rearmost among multiple mobility devices traveling in a platoon.

In one embodiment, an electronic device
is included in a mobility device, and includes a transmission antenna, a reception antenna, and a controller.

The transmission antenna transmits a transmission wave.

The reception antenna receives a reflected wave that is the transmission wave having been reflected.

The controller detects an object, based on a transmission signal transmitted as the transmission wave and a reception signal received as the reflected wave.

The controller skips outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.

In one embodiment, a method for controlling an electronic device is
a method for controlling an electronic device included in a mobility device. The method includes
transmitting a transmission wave from a transmission antenna,
receiving, from a reception antenna, a reflected wave that is the transmission wave having been reflected,
detecting an object, based on a transmission signal transmitted as the transmission wave and a reception signal received as the reflected wave, and
determining whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

In one embodiment, a method for controlling an electronic device is
a method for controlling an electronic device included in a mobility device. The method includes
transmitting a transmission wave from a transmission antenna,
receiving, from a reception antenna, a reflected wave that is the transmission wave having been reflected,
detecting an object, based on a transmission signal transmitted as the transmission wave and a reception signal received as the reflected wave, and
outputting a detection result of an object approaching the mobility device when the mobility device is rearmost among multiple mobility devices traveling in a platoon.

In one embodiment, a method for controlling an electronic device is
a method for controlling an electronic device included in a mobility device. The method includes
transmitting a transmission wave from a transmission antenna,
receiving, from a reception antenna, a reflected wave that is the transmission wave having been reflected,
detecting an object, based on a transmission signal transmitted as the transmission wave and a reception signal received as the reflected wave, and
skipping outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.

In one embodiment, a program causes
an electronic device included in a mobility device to
transmit a transmission wave from a transmission antenna,
receive, from a reception antenna, a reflected wave that is the transmission wave having been reflected,
detect an object, based on a transmission signal transmitted as the transmission wave and a reception signal received as the reflected wave, and
determine whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

In one embodiment, a program causes
an electronic device included in a mobility device to
transmit a transmission wave from a transmission antenna,
receive, from a reception antenna, a reflected wave that is the transmission wave having been reflected,
detect an object, based on a transmission signal transmitted as the transmission wave and a reception signal received as the reflected wave, and
output a detection result of an object approaching the mobility device when the mobility device is rearmost among multiple mobility devices traveling in a platoon.

In one embodiment, a program causes
an electronic device included in a mobility device to
transmit a transmission wave from a transmission antenna,
receive, from a reception antenna, a reflected wave that is the transmission wave having been reflected,
detect an object, based on a transmission signal transmitted as the transmission wave and a reception signal received as the reflected wave, and
skip outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.

### BRIEF DESCRIPTION OF THE DRAWINGS

FIG. 1 is a diagram for describing how an electronic device according to one embodiment is used.
FIG. 2 is a functional block diagram schematically illustrating a configuration of the electronic device according to the one embodiment.
FIG. 3 is a diagram for describing a structure of a transmission signal according to the one embodiment.
FIG. 4 is a diagram for describing an operation of the electronic device according to the one embodiment.
FIG. 5 is a diagram for describing an operation of the electronic device according to the one embodiment.
FIG. 6 is a flowchart for describing an operation of the electronic device according to the one embodiment.

### DESCRIPTION OF EMBODIMENTS

The technology, such as the radar described above, for detecting a predetermined object by receiving a reflected wave that is a transmitted transmission wave reflected off the object is desirably used to aid in platooning of mobility devices such as trucks. The present disclosure provides an electronic device, a method for controlling an electronic device, and a program that can be used to aid in platooning of mobility devices. According to one embodiment, an electronic device, a method for controlling an electronic device, and a program that can be used to aid in platooning of mobility devices can be provided. The one embodiment is described in detail below with reference to the drawings.

An electronic device according to one embodiment is mounted in a vehicle (mobility device) such as an automobile, for example, and is capable of detecting, as a target, a predetermined object located around the mobility device. To this end, the electronic device according to the one embodiment is capable of transmitting a transmission wave to an area around the mobility device from a transmission antenna installed on or in the mobility device. The electronic device according to the one embodiment is also capable of receiving a reflected wave that is the reflected transmission wave, from a reception antenna installed on or in the mobility device. For example, a radar sensor or the like installed on or in the mobility device may include at least one of the transmission antenna or the reception antenna.

A typical configuration example is described below in which the electronic device according to the one embodiment is mounted in an automobile such as a passenger car. However, the mobility device in which the electronic device according to the one embodiment is mounted is not limited to an automobile. The electronic device according to the one embodiment may be mounted in various mobility devices such as an autonomous car, a bus, a truck, a taxi, a motorcycle, a bicycle, a ship, an aircraft, a helicopter, agricultural machinery such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between a sensor and a predetermined object when at least one of the sensor or the object is movable. The electronic device according to the one embodiment is also capable of measuring a distance or the like between the sensor and the object even when both the sensor and the object are stationary. In addition, the automobile encompassed by the present disclosure is not limited by the overall length, the overall width, the overall height, the displacement, the seating capacity, the load, or the like. For example, the automobiles of the present disclosure include an automobile having a displacement greater than 660 cc and an automobile having a displacement equal to or less than 660 cc that is a so-called light automobile. The automobiles encompassed by the present disclosure also include an automobile that partially or entirely uses electricity as energy and uses a motor.

An example of how the electronic device according to the one embodiment detects an object is described.

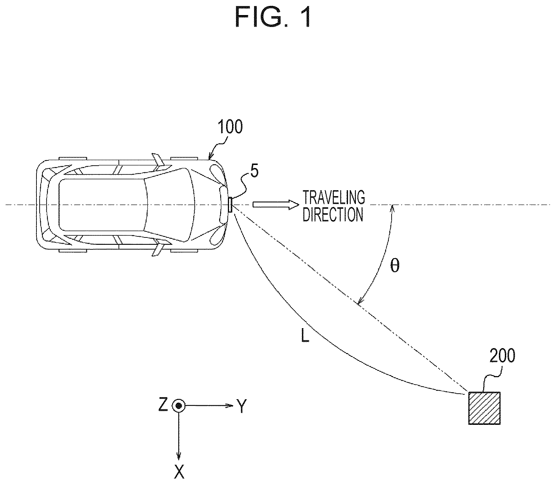

FIG. 1 is a diagram for describing how the electronic device according to the one embodiment is used. FIG. 1 illustrates an example in which a sensor including a transmission antenna and a reception antenna according to the one embodiment is installed on a mobility device.

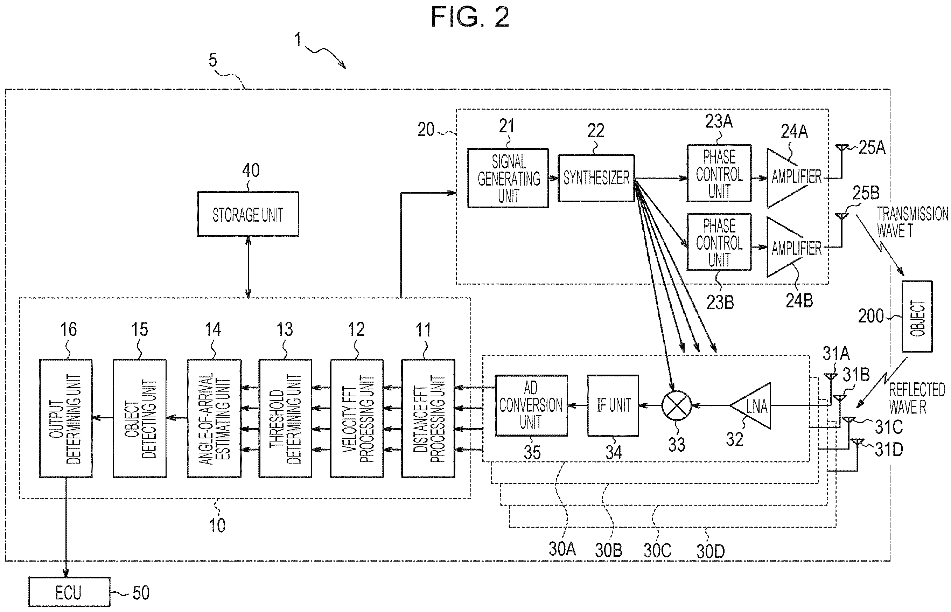

A mobility device 100 illustrated in FIG. 1 includes a sensor 5 installed thereon. The sensor 5 includes a transmission antenna and a reception antenna according to the one embodiment. The mobility device 100 illustrated in FIG. 1 includes an electronic device 1 according to the one embodiment mounted (for example, built) therein. A specific configuration of the electronic device 1 is described later. The sensor 5 may include at least one of the transmission antenna or the reception antenna, for example. The sensor 5 may appropriately include at least any of other functional units, such as at least part of a controller 10 (FIG. 2) included in the electronic device 1. The mobility device 100 illustrated in FIG. 1 may be an automotive vehicle such as a passenger car but may be a mobility device of any type. In FIG. 1, the mobility device 100 may move (travel or slowly travel), for example, in a positive Y-axis direction (traveling direction) illustrated in FIG. 1 or in another direction, or may be stationary without moving.

As illustrated in FIG. 1, the sensor 5 including the transmission antenna is installed on the mobility device 100. In the example illustrated in FIG. 1, only one sensor 5 including the transmission antenna and the reception antenna is installed at a front portion of the mobility device 100. The position where the sensor 5 is installed on the mobility device 100 is not limited to the position illustrated in FIG. 1 and may be another appropriate position. For example, the sensor 5 illustrated in FIG. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in FIG. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object as a target.

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as the radar and the LIDAR are already known, detailed description may be appropriately simplified or omitted.

The electronic device 1 mounted in the mobility device 100 illustrated in FIG. 1 receives, from the reception antenna, the reflected wave of the transmission wave transmitted from the transmission antenna of the sensor 5. In this manner, the electronic device 1 can detect, as the target, the predetermined object 200 located within a predetermined distance from the mobility device 100. For example, as illustrated in FIG. 1, the electronic device 1 can measure a distance L between the mobility device 100, which is a vehicle of interest, and the predetermined object 200. The electronic device 1 can also measure a relative velocity between the mobility device 100, which is the vehicle of interest, and the predetermined object 200. The electronic device 1 can further measure a direction (an angle of arrival θ) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling next to the mobility device 100, an automobile traveling in front of or behind the mobility device 100 in the same lane, or the like. The object 200 may also be any object located around the mobility device 100, such as a motorcycle, a bicycle, a stroller, a person such as a pedestrian, an animal, other forms of life such as an insect, a guardrail, a median strip, a road sign, a step on a sidewalk, a wall, a maintenance hole, or an obstacle. The object 200 may be in motion or stationary. For example, the object 200 may be an automobile or the like that is parked or stationary around the mobility device 100. In the present disclosure, the object detected by the sensor 5 includes a living thing such as a person or an animal in addition to a non-living thing. The object detected by the sensor 5 in the present disclosure includes a target, which includes a person, an object, and an animal, to be detected with the radar technology.

In FIG. 1, a ratio between a size of the sensor 5 and a size of the mobility device 100 does not necessarily indicate an actual ratio. FIG. 1 illustrates the sensor 5 that is installed at an outer portion of the mobility device 100. However, in one embodiment, the sensor 5 may be installed at various positions of the mobility device 100. For example, in one embodiment, the sensor 5 may be installed inside a bumper of the mobility device 100 so as not to be seen in the appearance of the mobility device 100.

A typical example is described below in which the transmission antenna of the sensor 5 transmits a radio wave in a frequency band, such as a millimeter wave (equal to or higher than 30 GHz) or a quasi-millimeter wave (for example, around 20 GHz to 30 GHz). For example, the transmission antenna of the sensor 5 may transmit a radio wave having a frequency bandwidth of 4 GHz such as from 77 GHz to 81 GHz.

FIG. 2 is a functional block diagram schematically illustrating an example of a configuration of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency band of 79 GHz has a feature that a usable frequency bandwidth is wider than other millimeter-wave and/or quasi-millimeter-wave radars of frequency bands of 24 GHz, 60 GHz, and 76 GHz, for example. Such an embodiment is described below as an example.

As illustrated in FIG. 2, the electronic device 1 according to the one embodiment includes the sensor 5 and an ECU (Electronic Control Unit) 50. The ECU 50 controls various operations of the mobility device 100. The ECU 50 may include at least one or more ECUs. The electronic device 1 according to the one embodiment includes the controller 10. The electronic device 1 according to the one embodiment may also appropriately include another functional unit such as at least any of a transmission unit 20, reception units 30A to 30D, or a storage unit 40. As illustrated in FIG. 2, the electronic device 1 may include multiple reception units such as the reception units 30A to 30D. When the reception units 30A, 30B, 30C, and 30D are not distinguished from one another, the reception units 30A, 30B, 30C, and 30D are simply referred to as "reception units 30" below.

The controller 10 may include a distance FFT processing unit 11, a velocity FFT processing unit 12, a threshold determining unit 13, an angle-of-arrival estimating unit 14, an object detecting unit 15, and an output determining unit 16. These functional units included in the controller 10 are further described later.

As illustrated in FIG. 2, the transmission unit 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in FIG. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in FIG. 2, each of the multiple reception units 30 may include an LNA 32, a mixer 33, an IF unit 34, and an AD conversion unit 35. The reception units 30A to 30D may have the same and/or similar configuration. FIG. 2 schematically illustrates the configuration of the reception unit 30A alone as a representative example.

The sensor 5 described above may include, for example, the transmission antennas 25 and the reception antennas 31. The sensor 5 may also appropriately include at least any of other functional units such as the controller 10.

The controller 10 included in the electronic device 1 according to the one embodiment is capable of controlling the individual functional units of the electronic device 1 and controlling operations of the entire electronic device 1. To provide control and processing capabilities for executing various functions, the controller 10 may include at least one processor, for example, a CPU (Central Processing Unit) or a DSP (Digital Signal Processor). The controller 10 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the one embodiment, the controller 10 may be configured as, for example, a CPU (hardware) and a program (software) executed by the CPU. The controller 10 may appropriately include a memory necessary for operations of the controller 10.

The storage unit 40 may store a program executed by the controller 10, results of processing performed by the controller 10, and so on. The storage unit 40 may function as a work memory of the controller 10. The storage unit 40 may include, for example, a semiconductor memory or a magnetic disk. However, the storage unit 40 is not limited to these, and can be any storage device. The storage unit 40 may be, for example, a storage medium such as a memory card inserted to the electronic device 1 according to the present embodiment. The storage unit 40 may be an internal memory of the CPU used as the controller 10 as described above.

In the one embodiment, the storage unit 40 may store various parameters for setting a range in which an object is detected based on a transmission wave T transmitted from each transmission antenna 25 and a reflected wave R received from each reception antenna 31.

In the electronic device 1 according to the one embodiment, the controller 10 is capable of controlling at least one of the transmission unit 20 or the reception units 30. In this case, the controller 10 may control at least one of the transmission unit 20 or the reception units 30, based on various kinds of information stored in the storage unit 40. In the electronic device 1 according to the one embodiment, the controller 10 may instruct the signal generating unit 21 to generate a signal or may control the signal generating unit 21 to generate a signal.

In accordance with control performed by the controller 10, the signal generating unit 21 generates a signal (transmission signal) to be transmitted as the transmission wave T from each of the transmission antennas 25. When generating a transmission signal, the signal generating unit 21 may allocate a frequency of the transmission signal in accordance with control performed by the controller 10, for example. Specifically, the signal generating unit 21 may allocate a frequency of the transmission signal in accordance with a parameter set by the controller 10, for example. For example, the signal generating unit 21 receives frequency information from the controller 10 or the storage unit 40 and generates a signal having a predetermined frequency in a frequency band such as from 77 GHz to 81 GHz, for example. The signal generating unit 21 may include a functional unit such as a voltage control oscillator (VCO), for example.

The signal generating unit 21 may be configured as hardware having the function, for example as a microcomputer, or for example as a processor such as a CPU and a program or the like executed by the processor. Each functional unit described below may also be configured as hardware having the function, for example as a microcomputer if possible, or for example as a processor such as a CPU and a program or the like executed by the processor if possible.

In the electronic device 1 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. For example, the controller 10 may set in advance the signal generated by the signal generating unit 21. For example, the storage unit 40 or the like may store in advance the signal generated by the signal generating unit 21. Since a chirp signal used in a technical field such as the radar is known, more detailed description is appropriately simplified or omitted. The signal generated by the signal generating unit 21 is supplied to the synthesizer 22.

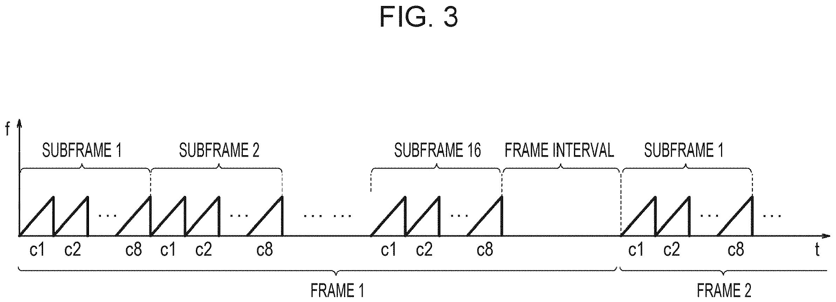

FIG. 3 is a diagram for describing an example of chirp signals generated by the signal generating unit 21.

In FIG. 3, the horizontal axis represents elapsed time, and the vertical axis represents a frequency. In the example illustrated in FIG. 3, the signal generating unit 21 generates linear chirp signals whose frequency changes linearly and periodically. FIG. 3 illustrates chirp signals c1, c2, ..., c8. As illustrated in FIG. 3, the frequency of each chirp signal linearly increases as time elapses.

In the example illustrated in FIG. 3, one subframe includes eight chirp signals c1, c2, ..., c8. That is, each of subframes such as a subframe 1 and a subframe 2 illustrated in FIG. 3 includes eight chirp signals c1, c2, ..., c8. In the example illustrated in FIG. 3, one frame includes 16 subframes such as the subframes 1 to 16. That is, each of frames such as a frame 1 and a frame 2 illustrated in FIG. 3 includes 16 subframes. As illustrated in FIG. 3, a frame interval of a predetermined length may be included between frames. Each single frame illustrated in FIG. 3 may have a length of about 30 ms to 50 ms, for example.

In FIG. 3, the frame 2 and subsequent frames may have the same and/or similar configuration. In FIG. 3, the frame 3 and subsequent frames may have the same and/or similar configuration. In the electronic device 1 according to the one embodiment, the signal generating unit 21 may generate a transmission signal as any number of frames. In FIG. 3, an illustration of some chirp signals is omitted. As described above, for example, the storage unit 40 or the like may store a relationship between time and a frequency of the transmission signal generated by the signal generating unit 21.

As described above, the electronic device 1 according to the one embodiment may transmit a transmission signal made up of subframes each including multiple chirp signals. The electronic device 1 according to the one embodiment may transmit a transmission signal made up of frames each including a predetermined number of subframes.

In the description below, the electronic device 1 transmits a transmission signal having the frame structure illustrated in FIG. 3. However, the frame structure illustrated in FIG. 3 is an example. For example, the number of chirp signals included in one subframe is not limited to eight. In one embodiment, the signal generating unit 21 may generate a subframe including any number of (for example, multiple) chirp signals. The subframe structure illustrated in FIG. 3 is also an example. For example, the number of subframes included in one frame is not limited to 16. In one embodiment, the signal generating unit 21 may generate a frame including any number of (for example, multiple) subframes. The signal generating unit 21 may generate signals having different frequencies. The signal generating unit 21 may generate multiple discrete signals of bandwidths in which frequencies f are different from each other.

Referring back to FIG. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. For example, the controller 10 may set the frequency selected as the frequency of the transmission wave T to be transmitted from each of the transmission antennas 25. For example, the storage unit 40 may store the frequency selected as the frequency of the transmission wave T to be transmitted from each of the transmission antennas 25. The signal whose frequency has been increased by the synthesizer 22 is supplied to the phase control unit 23 and the mixer 33. When the multiple phase control units 23 are present, the signal whose frequency has been increased by the synthesizer 22 may be supplied to each of the multiple phase control units 23. When the multiple reception units 30 are present, the signal whose frequency has been increased by the synthesizer 22 may be supplied to the mixer 33 of each of the multiple reception units 30.

Each of the phase control units 23 controls a phase of the transmission signal supplied from the synthesizer 22. Specifically, for example, in accordance with control performed by the controller 10, each of the phase control units 23 may appropriately advance or delay the phase of the signal supplied from the synthesizer 22 to adjust the phase of the transmission signal. In this case, based on a difference between paths of the transmission waves T to be transmitted from the multiple transmission antennas 25, the phase control units 23 may adjust the phases of the respective transmission signals. The phase control units 23 appropriately adjust the phases of the respective transmission signals, so that the transmission waves T transmitted from the respective transmission antennas 25 enhance with each other in a predetermined direction to form a beam (beamforming). In this case, for example, the storage unit 40 may store a correlation between a direction of beamforming and amounts of phase by which the respective transmission signals transmitted by the respective transmission antennas 25 are to be controlled. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the controller 10, for example. When the sensor 5 includes the multiple transmission antennas 25, each of the multiple amplifiers 24 may amplify power (electric power) of the transmission signal supplied from a respective one of the phase control units 23 in accordance with control performed by the controller 10, for example. Since the technology for amplifying power of a transmission signal is already known, more detailed description is omitted. The amplifier 24 is connected to the transmission antenna 25.

The transmission antenna 25 outputs (transmits), as the transmission wave T, the transmission signal amplified by the amplifier 24. When the sensor 5 includes the multiple transmission antennas 25, each of the multiple transmission antennas 25 may output (transmit), as the transmission wave T, the transmission signal amplified by a respective one of the multiple amplifiers 24. Since the transmission antennas 25 can have a configuration that is the same as and/or similar to the configuration of transmission antennas for use in the known radar technology, more detailed description is omitted.

Accordingly, the electronic device 1 according to the one embodiment, which includes the transmission antennas 25, can transmit transmission signals (for example, transmission chirp signals) as the transmission waves T from the respective transmission antennas 25. At least one of the functional units of the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the transmission antennas 25 with a member such as the radar cover can reduce a risk of the transmission antennas 25 being damaged or malfunctioning because of a contact with an external object. The radar cover and the housing may also be referred to as a radome.

FIG. 2 illustrates an example of the electronic device 1 that includes two transmission antennas 25. However, in one embodiment, the electronic device 1 may include any number of transmission antennas 25. On the other hand, in one embodiment, the electronic device 1 may include the multiple transmission antennas 25 when the transmission waves T transmitted from the respective transmission antennas 25 form a beam in a predetermined direction. In one embodiment, the electronic device 1 may include multiple transmission antennas 25. In this case, the electronic device 1 may include the multiple phase control units 23 and the multiple amplifiers 24 to correspond to the multiple transmission antennas 25. Each of the multiple phase control units 23 may control the phase of a respective one of the multiple transmission waves supplied from the synthesizer 22 and to be transmitted from the respective transmission antennas 25. Each of the multiple amplifiers 24 may amplify power of a respective one of the multiple transmission signals to be transmitted from the respective transmission antennas 25. In this case, the sensor 5 may include the multiple transmission antennas. As described above, when the electronic device 1 illustrated FIG. 2 includes the multiple transmission antennas 25, the electronic device 1 may include multiple functional units necessary for transmitting the transmission waves T from the multiple transmission antennas 25.

The reception antenna 31 receives the reflected wave R. The reflected wave R may be the transmission wave T reflected off the predetermined object 200. The reception antenna 31 may include multiple antennas such as the reception antennas 31A to 31D, for example. Since the reception antennas 31 can have a configuration that is the same as and/or similar to the configuration of reception antennas for use in the known radar technology, more detailed description is omitted. The reception antenna 31 is connected to the LNA 32. A reception signal based on the reflected wave R received by the reception antenna 31 is supplied to the LNA 32.

The electronic device 1 according to the one embodiment can receive, from each of the multiple reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the reception antennas 31 with a member such as the radar cover can reduce a risk of the reception antennas 31 being damaged or malfunctioning because of a contact with an external object. The radar cover and the housing may also be referred to as a radome.

When the reception antenna 31 is installed near the transmission antenna 25, these reception antenna 31 and transmission antenna 25 may be collectively included in one sensor 5. That is, for example, one sensor 5 may include at least one transmission antenna 25 and at least one reception antenna 31. For example, one sensor 5 may include the multiple transmission antennas 25 and the multiple reception antennas 31. In such a case, one radar sensor may be covered with a cover member such as one radar cover, for example.

The LNA 32 amplifies, with low noise, the reception signal based on the reflected wave R received by the reception antenna 31. The LNA 32 may be a low-noise amplifier and amplifies, with low noise, the reception signal supplied from the reception antenna 31. The reception signal amplified by the LNA 32 is supplied to the mixer 33.

The mixer 33 mixes (multiplies) the reception signal having a radio frequency (RF) and supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to decrease the frequency of the beat signal to an intermediate frequency (IF). The beat signal whose frequency has been decreased by the IF unit 34 is supplied to the AD conversion unit 35.

The AD conversion unit 35 digitizes the analog beat signal supplied from the IF unit 34. The AD conversion unit 35 may be configured as any analog-to-digital conversion circuit (Analog-to-Digital Converter (ADC)). The digitized beat signal obtained by the AD conversion unit 35 is supplied to the distance FFT processing unit 11 of the controller 10. When the multiple reception units 30 are present, the digitized beat signals obtained by the respective AD conversion units 35 may be supplied to the distance FFT processing unit 11 of the controller 10.

The distance FFT processing unit 11 estimates a distance between the mobility device 100 equipped with the electronic device 1 and the object 200, based on the beat signals supplied from the respective AD conversion units 35. The distance FFT processing unit 11 may include a processing unit that performs fast Fourier transform, for example. In this case, the distance FFT processing unit 11 may be configured as any circuit, any chip, or the like that performs fast Fourier transform (FFT).

The distance FFT processing unit 11 performs FFT processing (hereinafter, appropriately referred to as "distance FFT processing") on the digitized beat signals obtained by the AD conversion units 35. For example, the distance FFT processing unit 11 may perform FFT processing on complex signals supplied from the AD conversion units 35. The digitized beat signals obtained by the AD conversion units 35 can be represented as temporal changes in signal intensity (power). The distance FFT processing unit 11 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 11 may determine that the predetermined object 200 is located at the distance corresponding to the peak. For example, in a known method such as constant false alarm rate (CFAR)-based detection processing, an object (reflecting object) that reflects a transmission wave is determined to be present if a peak value that is equal to or greater than a threshold is detected from the average power or amplitude of a disturbance signal. For example, the threshold determining unit 13 (described later) may determine whether an object is present based on such a threshold.

As described above, the electronic device 1 according to the one embodiment can detect the object 200 that reflects the transmission wave T, based on the transmission signal transmitted as the transmission wave T and the reception signal received as the reflected wave R.

The distance FFT processing unit 11 can estimate a distance to a predetermined object, based on one chirp signal (for example, c1 illustrated in FIG. 3). That is, the electronic device 1 can measure (estimate) the distance L illustrated in FIG. 1 by performing the distance FFT processing. Since a technique for measuring (estimating) a distance to a predetermined object by performing FFT processing on a beat signal is known, more detailed description is appropriately simplified or omitted. The result (for example, distance information) of the distance FFT processing performed by the distance FFT processing unit 11 may be supplied to the velocity FFT processing unit 12. The result of the distance FFT processing performed by the distance FFT processing unit 11 may also be supplied to the threshold determining unit 13, the object detecting unit 15, the output determining unit 16, and/or the like.

The velocity FFT processing unit 12 estimates a relative velocity between the mobility device 100 equipped with the electronic device 1 and the object 200, based on the beat signals on which the distance FFT processing has been performed by the distance FFT processing unit 11. The velocity FFT processing unit 12 may include a processing unit that performs fast Fourier transform, for example. In this case, the velocity FFT processing unit 12 may be configured as any circuit, any chip, or the like that performs fast Fourier transform (FFT).

The velocity FFT processing unit 12 further performs FFT processing (hereinafter, appropriately referred to as "velocity FFT processing") on the beat signals on which the distance FFT processing unit 11 has performed the distance FFT processing. For example, the velocity FFT processing unit 12 may perform FFT processing on the complex signals supplied from the distance FFT processing unit 11. The velocity FFT processing unit 12 can estimate a relative velocity to the predetermined object on the basis of a subframe (for example, the subframe 1 illustrated in FIG. 3) including chirp signals. When the distance FFT processing is performed on the beat signal in the above-described manner, multiple vectors can be generated. The velocity FFT processing unit 12 can estimate a relative velocity to the predetermined object by determining a phase of a peak in a result of the velocity FFT processing performed on these multiple vectors. That is, the electronic device 1 can measure (estimate) a relative velocity between the mobility device 100 and the predetermined object 200 illustrated in FIG. 1 by performing the velocity FFT processing. Since a technique for measuring (estimating) a relative velocity to a predetermined object by performing velocity FFT processing on a result of distance FFT processing is known, more detailed description is appropriately simplified or omitted. The result (for example, velocity information) of the velocity FFT processing performed by the velocity FFT processing unit 12 may be supplied to the angle-of-arrival estimating unit 14. The result of the velocity FFT processing performed by the velocity FFT processing unit 12 may also be supplied to the threshold determining unit 13, the object detecting unit 15, the output determining unit 16, and/or the like.

The threshold determining unit 13 performs determination processing for a distance and/or a relative velocity, based on the result of the distance FFT processing performed by the distance FFT processing unit 11 and/or the result of the velocity FFT processing performed by the velocity FFT processing unit 12. The threshold determining unit 13 may perform the determination based on a predetermined threshold. For example, the threshold determining unit 13 may determine whether the result of the distance FFT processing performed by the distance FFT processing unit 11 and/or the result of the velocity FFT processing performed by the velocity FFT processing unit 12 exceeds a predetermined threshold. The threshold determining unit 13 may determine that an object has been detected at the distance and/or the relative velocity at which the result exceeds the predetermined threshold.

The threshold determining unit 13 may output results exceeding the predetermined threshold among the results of the distance FFT processing performed by the distance FFT processing unit 11 and/or the results of the velocity FFT processing performed by the velocity FFT processing unit 12. The operation performed by the threshold determining unit 13 may be same as and/or similar to, for example, detection processing based on a constant false alarm rate (CFAR). In one embodiment, the operation performed by the threshold determining unit 13 may be processing based on Order Statistic CFAR (OS-CFAR). OS-CFER is a technique in which a threshold is set based on ordered statistics and a target is determined to be present if the signal intensity exceeds the threshold. The result of the threshold-based determination processing performed by the threshold determining unit 13 may be supplied to the angle-of-arrival estimating unit 14. The result of the processing performed by the threshold determining unit 13 may also be supplied to the object detecting unit 15 and/or the output determining unit 16.

The angle-of-arrival estimating unit 14 estimates a direction from which the reflected wave R arrives from the predetermined object 200, based on the result of the velocity FFT processing performed by the velocity FFT processing unit 12. The angle-of-arrival estimating unit 14 may estimate the direction from which the reflected wave R arrives from the predetermined object 200, based on the result output from the threshold determining unit 13 among the results of the velocity FFT processing performed by the velocity FFT processing unit 12. The electronic device 1 can estimate the direction from which the reflected wave R arrives, by receiving the reflected wave R from the multiple reception antennas 31. For example, the multiple reception antennas 31 are arranged at a predetermined interval. In this case, the transmission wave T transmitted from each of the transmission antennas 25 is reflected off the predetermined object 200 to become the reflected wave R. Each of the multiple reception antennas 31 arranged at the predetermined interval receives the reflected wave R. The angle-of-arrival estimating unit 14 can estimate the direction from which the reflected wave R arrives at each of the multiple reception antennas 31, based on the phase of the reflected wave R received by the reception antenna 31 and a difference in path of the reflected wave R. That is, the electronic device 1 can measure (estimate) the angle of arrival θ illustrated in FIG. 1, based on the result of the velocity FFT processing.

Various techniques for estimating the direction from which the reflected wave R arrives based on a result of velocity FFT processing have been proposed. For example, MUSIC (Multiple Signal Classification), ESPRIT (Estimation of Signal Parameters via Rotational Invariance Technique), and the like are known direction-of-arrival estimation algorithms. Thus, more detailed description of the known techniques is appropriately simplified or omitted. Information (angle information) on the angle of arrival 0 estimated by the angle-of-arrival estimating unit 14 may be supplied to the object detecting unit 15.

The object detecting unit 15 detects an object located in a range to which the transmission wave T is transmitted, based on the information supplied from at least any of the distance FFT processing unit 11, the velocity FFT processing unit 12, the threshold determining unit 13, or the angle-of-arrival estimating unit 14. The object detecting unit 15 may perform detection of an object by performing, for example, clustering processing based on the supplied distance information, velocity information, and angle information. For example, DBSCAN (Density-based spatial clustering of applications with noise) or the like is a known algorithm used in clustering of data. In the clustering processing, for example, average power of points constituting the detected object may be calculated. The distance information, the velocity information, the angle information, and/or the electric power information of the object detected by the object detecting unit 15 may be supplied to the output determining unit 16.

The output determining unit 16 determines whether to output the information (detection result) input from the object detecting unit 15, to the ECU 50 or the like. The output determining unit 16 outputs the input information in a predetermined state but does not output the input information in another predetermined state. For example, the output determining unit 16 may output the input information when a predetermined condition is met and may skip outputting the input information when the predetermined condition is not met. The output determining unit 16 may skip outputting the input information when a predetermined condition is met and may output the input information when the predetermined condition is not met. The determination as to whether the output determining unit 16 outputs the information (detection result) input from the object detecting unit 15, to the ECU 50 or the like is further described later.

As described above, the output of the output determining unit 16 may be supplied to, for example, the ECU 50. In this case, when the mobility device 100 is an automobile, communication may be performed using a communication interface such as a CAN (Controller Area Network), for example.

The ECU 50 included in the electronic device 1 according to the one embodiment is capable of controlling functional units of the mobility device 100 and controlling operations of the entire mobility device 100. To provide control and processing capabilities for executing various functions, the ECU 50 may include at least one processor, for example, a CPU (Central Processing Unit) or a DSP (Digital Signal Processor). The ECU 50 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In one embodiment, the ECU 50 may be configured as, for example, a CPU and a program executed by the CPU. The ECU 50 may appropriately include a memory necessary for operations of the ECU 50. At least part of the functions of the controller 10 may be functions of the ECU 50, or at least part of the functions of the ECU 50 may be functions of the controller 10.

The electronic device 1 illustrated in FIG. 2 includes the two transmission antennas 25 and the four reception antennas 31. However, the electronic device 1 according to the one embodiment may include any number of transmission antennas 25 and any number of reception antennas 31. For example, by including the two transmission antennas 25 and the four reception antennas 31, the electronic device 1 can include a virtual antenna array that is virtually constituted by eight antennas. As described above, the electronic device 1 may receive the reflected wave R of 16 subframes illustrated in FIG. 3 by using, for example, the eight virtual antennas.

An operation of the electronic device 1 according to the one embodiment is described.

For example, the electronic device 1 according to the one embodiment is included in a mobility device such as a truck, and thus can determine whether the mobility device is rearmost among multiple mobility devices traveling in a platoon. The electronic device 1 according to the one embodiment can implement a function suitable for each case in accordance with whether the mobility device including the electronic device 1 is rearmost among the multiple mobility devices traveling in a platoon.

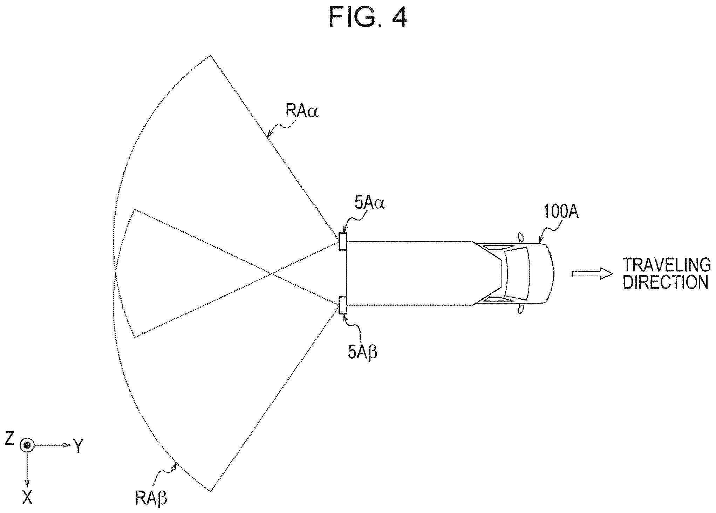

FIG. 4 is a diagram for describing an example of how the electronic device 1 according to the one embodiment is used when the electronic device 1 operates.

As illustrated in FIG. 4, a mobility device 100A such as a truck, for example, may include the electronic device 1. As described above, a mobility device may include the electronic device 1. The mobility device 100A may be capable of traveling in a platoon. As described above, the mobility device 100A is not limited to a truck but may be capable of traveling in a platoon. If the mobility device 100A is not an object that travels such as an automobile but an object that flies such as a drone, the mobility device 100A may fly in a platoon instead of traveling in a platoon.

The mobility device 100A illustrated in FIG. 4 includes a sensor 5Aα and a sensor 5Aβ at respective rear corners with respect to the traveling direction. An electronic device 1A may include the sensor 5Aα and the sensor 5Aβ. The electronic device 1A may have a configuration that is the same as and/or similar to that of the electronic device 1 illustrated in FIG. 2. The sensor 5Aα and the sensor 5Aβ may each have a configuration that is the same as and/or similar to that of the sensor 5 illustrated in FIG. 2. In the description below, the mobility device 100A includes the electronic device 1A.

As illustrated in FIG. 4, the sensor 5Aα may be installed at a left rear corner with respect to the traveling direction (a positive Y-axis direction illustrated in FIG. 4) of the mobility device 100A. The sensor 5Aβ may be installed at a right rear corner with respect to the traveling direction of the mobility device 100A. FIG. 4 illustrates a range RAα which is a range in which the sensor 5Aα detects an object. FIG. 4 illustrates a range RAβ which is a range in which the sensor 5Aβ detects an object. In one embodiment, the sensor 5Aα and the sensor 5Aβ of the electronic device 1A may be installed at respective positions where an object located in a side direction and/or in a rear direction with respect to the traveling direction of the mobility device 100A is detectable. Thus, as illustrated in FIG. 4, the sensor 5Aα and the sensor 5Aβ of the electronic device 1A may be at a side portion or a rear portion of the mobility device 100A. Such an arrangement of the sensor 5Aα and the sensor 5Aβ allows the electronic device 1A to detect, for example, an automobile or the like traveling in a lane (such as a lane for automobiles) adjacent to a lane (such as a lane for automobiles) in which the mobility device 100A is traveling.

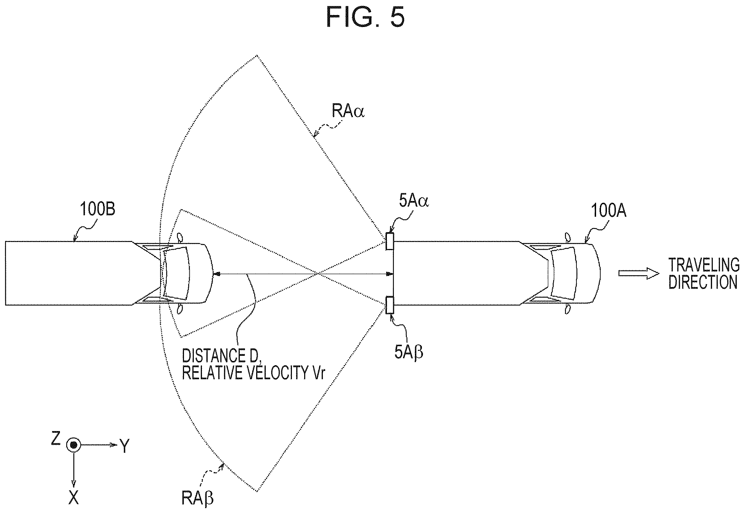

FIG. 5 is a diagram illustrating a state in which the mobility device 100A including the electronic device 1A is traveling in a platoon.

FIG. 5 illustrates a state in which a mobility device 100B such as a truck travels (follows) in succession to the mobility device 100A, for example. When multiple mobility devices travel in a platoon in this manner, the multiple mobility devices are separate from each other by a predetermined inter-vehicle distance and travel at substantially the same velocity. Thus, for example, when the mobility devices 100A and 100B illustrated in FIG. 5 travel in a platoon, a distances D between the mobility devices 100A and 100B is kept to be a substantially constant value and a relative velocity Vr between the mobility devices 100A and 100B is substantially equal to 0. The relative velocity Vr between the mobility devices 100A and 100B may be strictly equal to 0, or is not strictly equal to 0 but may be equal to or less than a predetermined threshold close to 0, for example.

Thus, when the electronic device 1 detects an object having the relative velocity Vr of 0 or of a predetermined threshold or less at the predetermined distance D behind the mobility device 100A as illustrated in FIG. 5, the electronic device 1 may determine that the mobility device 100A is not rearmost in the platoon. That is, when the electronic device 1 of the mobility device 100A detects the mobility device 100B that is a following vehicle traveling in a platoon, the electronic device 1 may determine that the mobility device 100A is not rearmost in the platoon. On the other hand, when the electronic device 1 does not detect any object having the relative velocity Vr of 0 or of the predetermined threshold or less at the predetermined distance D behind the mobility device 100A as illustrated in FIG. 4, the electronic device 1 may determine that the mobility device 100A is rearmost in the platoon. That is, when the electronic device 1 of the mobility device 100A does not detect the mobility device 100B that is a following vehicle traveling in a platoon, the electronic device 1 may determine that the mobility device 100A is rearmost in the platoon. The controller 10 of the electronic device 1A may perform such determination processing, based on a result of receiving a reflected wave that is a reflected transmission wave.

FIGs. 4 and 5 describe the simplest example case where the multiple mobility devices traveling in a platoon are just the mobility devices 100A and 100B. However, even when the multiple mobility devices traveling in a platoon are three or more mobility devices, each of the mobility devices includes the electronic device 1 and thus is similarly capable of determining whether the mobility device is rearmost.

As described above, when the controller 10 does not detect any object having a relative velocity of a predetermined threshold or less relative to the mobility device 100A at a predetermined distance behind the mobility device 100A in the traveling direction of the mobility device 100A, the controller 10 may determine that the mobility device 100A is rearmost among multiple mobility devices traveling in a platoon. On the other hand, when the controller 10 detects the object having the relative velocity of the predetermined threshold or less relative to the mobility device 100A at the predetermined distance behind the mobility device 100A in the traveling direction of the mobility device 100A, the controller 10 may determine that the mobility device 100A is not rearmost among the multiple mobility devices traveling in a platoon. Thus, the controller 10 may determine whether the mobility device 100A is rearmost among the multiple mobility devices traveling in a platoon, in accordance with whether the object having the relative velocity of the predetermined threshold or less relative to the mobility device 100A is detected at the predetermined distance behind the mobility device 100 A in the traveling direction of the mobility device 100A. The controller 10 may determine whether the mobility device 100A is rearmost among the multiple mobility devices traveling in a platoon, in accordance with whether an object having a relative velocity of 0 or substantially 0 relative to the mobility device 100A is detected.

As described above, the electronic device 1 can determine whether the mobility devices 100 including the electronic device 1 is rearmost among multiple mobility devices traveling in a platoon. Thus, the electronic device 1 can be provided as an electronic device that is used to aid in platooning of mobility devices.

For example, as illustrated in FIG. 4, when the mobility device 100A is rearmost among the multiple mobility devices traveling in a platoon, the sensor 5Aα and the sensor 5Aβ of the electronic device 1A can detect an object located in the side direction and/or the rear direction of the mobility device 100A. Thus, when the mobility device 100A is rearmost in the platoon, the electronic device 1A may output, for example, only a detection result of an object approaching the mobility device 100A. In this case, the output determining unit 16 of the controller 10 may output only a detection result of an object whose distance from the mobility device 100A decreases every moment and/or an object whose relative velocity relative to the mobility device 100A is not 0 or is not close to 0, for example.

As described above, the controller 10 may output a detection result of an object approaching the mobility device 100A when the mobility device 100A is rearmost among the multiple mobility devices traveling in a platoon.

On the other hand, for example, as illustrated in FIG. 5, when the mobility device 100A is not rearmost among the multiple mobility devices traveling in a platoon, the sensor 5Aα and the sensor 5Aβ of the electronic device 1A may erroneously detect the following mobility device 100B as another object. Thus, when the mobility device 100A is not rearmost in the platoon, the electronic device 1A may skip outputting the detection result of the object that is expected to be the mobility device 100B, for example. In this case, the output determining unit 16 of the controller 10 may skip outputting the detection result of an object having the relative velocity Vr of 0 or of the predetermined threshold or less at the predetermined distance D behind the mobility device 100A, for example.

As described above, when the mobility device 100A is not rearmost among the multiple mobility devices traveling in a platoon, the controller 10 may skip outputting a detection result of an object having the relative velocity of the predetermined threshold or less relative to the mobility device 100A at the predetermined distance behind the mobility device 100A in the traveling direction of the mobility device 100A.

For example, as illustrated in FIG. 5, when the mobility device 100A is not rearmost among the multiple mobility devices traveling in a platoon, the sensor 5Aα and the sensor 5Aβ of the electronic device 1A can detect an automobile or the like traveling in a lane adjacent to a lane in which the mobility device 100A is traveling, for example. In this case, the sensor 5Aα and the sensor 5Aβ of the electronic device 1A may output a detection result of an object traveling next to the mobility device 100A, for example. In this case, the sensor 5Aα and the sensor 5Aβ of the electronic device 1A may output a detection result of an object traveling next to the multiple mobility devices traveling in a platoon including the mobility device 100A. In this case, the sensor 5Aα and the sensor 5Aβ of the electronic device 1A may output a detection result of an object running in a lane adjacent to a lane in which the mobility device 100A is running.

As described above, when the mobility device 100A is not rearmost among the multiple mobility devices traveling in a platoon, the controller 10 may output a detection result of an object traveling next to the mobility device 100A. When the mobility device 100A is not rearmost among the multiple mobility devices traveling in a platoon, the controller 10 may output a detection result of an object traveling next to the multiple mobility devices traveling in a platoon. When the mobility device 100A is not rearmost among the multiple mobility devices traveling in a platoon, the controller 10 may output a detection result of an object running (traveling) in a lane adjacent to a lane in which the mobility device 100A is running (traveling).

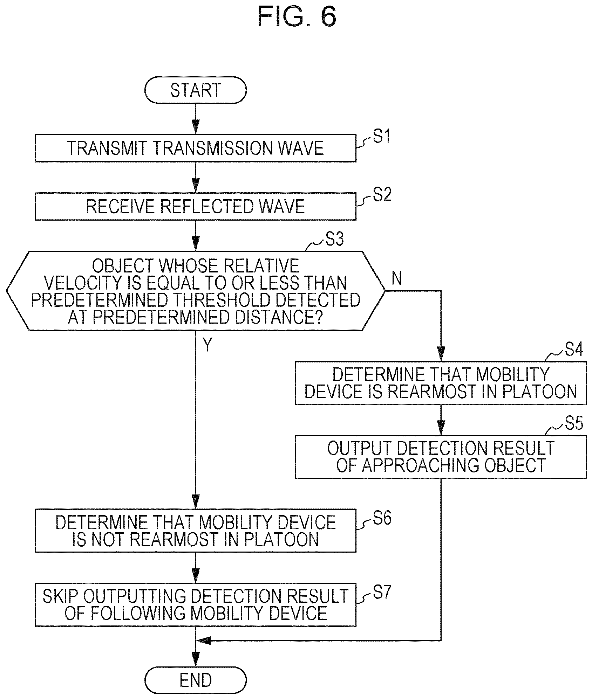

FIG. 6 is a flowchart for describing an operation of the electronic device 1A.

At a time point when the operation illustrated in FIG. 6 starts, the mobility device 100A including the electronic device 1A may be traveling in a platoon with other mobility devices (for example, the mobility device 100B), or may be, for example, traveling alone instead of traveling in a platoon.

In response to the start of the operation illustrated in FIG. 6, the controller 10 of the electronic device 1A included in the mobility device 100A performs control to transmit a transmission wave from the transmission antenna 25 (step S1).

In response to the transmission wave being transmitted in step S1, the controller 10 performs control to receive, from the reception antenna 31 of the electronic device 1A, a reflected wave that is the transmission wave reflected off an object (step S2).

In response to the reflected wave being received in step S2, the controller 10 performs object detection processing, based on a transmission signal transmitted as the transmission wave and a reception signal received as the reflected wave (step S3).

In step S3, the controller 10 may perform object detection processing, based on results of distance FFT processing and velocity FFT processing performed on beat signals obtained from the transmission wave and the reflected wave. For example, in step S3, the distance FFT processing unit 11 may perform the distance FFT processing, and the velocity FFT processing unit 12 may perform the velocity FFT processing. In particular, in step S3, the controller 10 may determine whether an object having a relative velocity of the predetermined threshold or less relative to the mobility device 100A is detected at the predetermined distance behind the mobility device 100A in the traveling direction of the mobility device 100A.

In step S3, the "predetermined distance" may be set in advance to a distance that is expected as an inter-vehicle distance to a following mobility device when the mobility device 100A is traveling in a platoon. The "predetermined distance" may change depending on various conditions such as a situation of a road on which the mobility devices are traveling in a platoon, traffic regulations, and/or a velocity at which the mobility devices are traveling in a platoon. For example, when the mobility device 100A is traveling at a velocity of 60 km per hour, the predetermined distance may be any distance around 60 m. When the mobility device 100A is traveling at a velocity of 100 km per hour, the predetermined distance may be any distance around 100 m. In step S3, the controller 10 may determine whether an object having a relative velocity of 0 or substantially 0 relative to the mobility device 100A is detected.

If NO in step S3, that is, if an object having a relative velocity of the predetermined threshold or less is not detected at the predetermined distance, the controller 10 determines that the mobility device 100A is rearmost among the multiple mobility devices traveling in a platoon (step S4).

If the process proceeds to step S4, that is, if the mobility device 100A is determined to be rearmost among the multiple mobility devices traveling in a platoon, the controller 10 may output, for example, only a detection result of an object approaching the mobility device 100A (step S5). In step S5, the output determining unit 16 of the controller 10 may output a detection result of only the object that is determined to be approaching the mobility device 100A based on the relative velocity between the detected object and the mobility device 100 A.

On the other hand, if YES in step S3, that is, if an object having a relative velocity of the predetermined threshold or less is detected at the predetermined distance, the controller 10 determines that the mobility device 100A is not rearmost among the multiple mobility devices traveling in a platoon (step S6).

If the process proceeds to step S6, that is, if the mobility device 100A is determined not to be rearmost among the multiple mobility devices traveling in a platoon, the controller 10 may skip outputting a detection result of a mobility device expected to be a following vehicle in the platoon (step S7). In step S7, the output determining unit 16 of the controller 10 may skip outputting a detection result of the object having the relative velocity of the predetermined threshold or less (or of 0 or substantially 0) at the predetermined distance.

As described above, in step S7, the controller 10 may detect an object running in a lane adjacent to a lane in which the mobility device 100A is running, and output the detection result. The output determining unit 16 of the controller 10 may output a detection result of an object such as a mobility device traveling next to the mobility device 100A. The output determining unit 16 of the controller 10 may output a detection result of an object traveling next to the multiple mobility devices traveling in a platoon.

After the processing in step S7 or step S5, the controller 10 may end the operation illustrated in FIG. 6. In response to the end of the operation illustrated in FIG. 6, the controller 10 may start the operation illustrated in FIG. 6 again.

As described above, the electronic device 1 can implement a function suitable for each case in accordance with whether the mobility device 100A including the electronic device 1 is rearmost among the multiple mobility devices traveling in a platoon. Thus, the electronic device 1 can be provided as an electronic device that is used to aid in platooning of mobility devices.

In the embodiment described above, the electronic device 1 receives a reflected wave that is a transmission wave having been reflected, to determine whether the mobility device 100A is rearmost among the multiple mobility devices traveling in a platoon. The electronic device 1 performs control so that a different operation is performed in accordance with the determination result. On the other hand, for example, the order of the multiple mobility devices in a platoon or the like may be determined in advance in some cases. In such cases, the electronic device 1 may skip determining whether the mobility device 100A is rearmost among the multiple mobility devices traveling in a platoon, based on the processing from step S1 to step S3 illustrated in FIG. 6, for example. In this case, the electronic device 1 may determine whether the mobility device traveling in a platoon is rearmost, based on given information.

For example, when the order of the multiple mobility devices in a platoon or the like is determined in advance and stored in the storage unit 40, the controller 10 may determine whether the mobility device 100 A is rearmost among the multiple mobility devices traveling in a platoon, based on the stored information. For example, if information on the order of platooning or the like is obtained by vehicle-to-vehicle communication performed between the multiple mobility devices traveling in a platoon, the controller 10 may determine whether the mobility device 100A is rearmost among the multiple mobility devices traveling in a platoon, based on the obtained information. The electronic device 1 may perform control so that a different operation suitable for each case is performed in accordance with the determination result.

As described above, the electronic device 1 may determine whether the mobility device 100A is rearmost among the multiple mobility devices traveling in a platoon, based on the obtained information. In this case, when the mobility device 100A is rearmost among the multiple mobility devices traveling in a platoon, the controller 10 may output a detection result of an object approaching the mobility device 100A. When the mobility device 100A is not rearmost among the multiple mobility devices traveling in a platoon, the controller 10 may skip outputting a detection result of the object having the relative velocity of the predetermined threshold or less relative to the mobility device 100A at the predetermined distance behind the mobility device 100A in the traveling direction of the mobility device 100 A.

While the present disclosure has been described based on the various drawings and the embodiments, it is to be noted that a person skilled in the art can easily make various variations or corrections based on the present disclosure. Therefore, it is to be noted that these variations or corrections are within the scope of the present disclosure. For example, functions and the like included in each functional unit can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Therefore, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, multiple functional units, means, steps, or the like may be combined into one or may be divided. The embodiments of the present disclosure described above are not limited to strict implementation according to the respective embodiments described above, and may be implemented by appropriately combining the features or omitting part thereof.

For example, in the embodiments described above, the description has been given of the configuration in which the object detection ranges are dynamically switched between by using the one sensor 5. However, in one embodiment, detection of an object may be performed in the determined object detection ranges by using the plurality of sensors 5. In one embodiment, beamforming may be performed toward the determined object detection ranges by using the plurality of sensors 5.

The embodiments described above are not limited to implementation as the electronic device 1. For example, the embodiments described above may be implemented as a method for controlling a device such as the electronic device 1. For example, the embodiments described above may be implemented as a program executed by a device such as the electronic device 1.

The electronic device 1 according to one embodiment may include, as the minimum configuration, at least part of at least one of the sensor 5 or the controller 10, for example. On the other hand, the electronic device 1 according to one embodiment may appropriately include at least any of the signal generating unit 21, the synthesizer 22, the phase control units 23, the amplifiers 24, or the transmission antennas 25 illustrated in FIG. 2 in addition to the controller 10. The electronic device 1 according to the one embodiment may appropriately include at least any of the reception antenna 31, the LNA 32, the mixer 33, the IF unit 34, or the AD conversion unit 35 instead of or along with the functional units described above. The electronic device 1 according to the one embodiment may include the storage unit 40. As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 and the reception antennas 31 may be installed outside the mobility device 100.

### REFERENCE SIGNS

- 1: electronic device
- 5: sensor
- 10: controller
- 11: distance FFT processing unit
- 12: velocity FFT processing unit
- 13: threshold determining unit
- 14: angle-of-arrival estimating unit
- 15: object detecting unit
- 16: output determining unit
- 20: transmission unit
- 21: signal generating unit
- 22: synthesizer
- 23: phase control unit
- 24: amplifier
- 25: transmission antenna
- 30: reception unit
- 31: reception antenna
- 32: LNA
- 33: mixer
- 34: IF unit
- 35: AD conversion unit
- 40: storage unit
- 50: ECU
- 100: mobility device
- 200: object

## Claims

1. An electronic device included in a mobility device, comprising:
a transmission antenna configured to transmit a transmission wave;
a reception antenna configured to receive a reflected wave that is the transmission wave having been reflected; and
a controller configured to detect an object, based on a transmission signal transmitted as the transmission wave and a reception signal received as the reflected wave,
wherein the controller is configured to determine whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

2. The electronic device according to claim 1, wherein the controller is configured to determine that the mobility device is rearmost among the multiple mobility devices traveling in a platoon when the object having the relative velocity of the predetermined threshold or less relative to the mobility device is not detected at the predetermined distance behind the mobility device in the traveling direction of the mobility device.

3. The electronic device according to claim 1 or 2, wherein the controller is configured to determine that the mobility device is not rearmost among the multiple mobility devices traveling in a platoon when the object having the relative velocity of the predetermined threshold or less relative to the mobility device is detected at the predetermined distance behind the mobility device in the traveling direction of the mobility device.

4. The electronic device according to any of claims 1 to 3, wherein the controller is configured to output a detection result of an object approaching the mobility device when the mobility device is rearmost among the multiple mobility devices traveling in a platoon.

5. The electronic device according to any of claims 1 to 4, wherein the controller is configured to skip outputting a detection result of the object having the relative velocity of the predetermined threshold or less relative to the mobility device at the predetermined distance behind the mobility device in the traveling direction of the mobility device when the mobility device is not rearmost among the multiple mobility devices traveling in a platoon.

6. The electronic device according to any of claims 1 to 5, wherein the controller is configured to determine whether the mobility device is rearmost among the multiple mobility devices traveling in a platoon, in accordance with whether an object having a relative velocity of 0 relative to the mobility device is detected.

7. The electronic device according to any of claims 1 to 6, wherein the controller is configured to output a detection result of an object traveling next to the mobility device when the mobility device is not rearmost among the multiple mobility devices traveling in a platoon.

8. The electronic device according to any of claims 1 to 6, wherein the controller is configured to output a detection result of an object traveling next to the multiple mobility devices traveling in a platoon when the mobility device is not rearmost among the multiple mobility devices traveling in a platoon.

9. The electronic device according to any of claims 1 to 6, wherein the controller is configured to output a detection result of an object running in a lane adjacent to a lane in which the mobility device is running when the mobility device is not rearmost among the multiple mobility devices traveling in a platoon.

10. The electronic device according to any of claims 1 to 9, wherein the electronic device is at a side portion or a rear portion of the mobility device.

11. An electronic device included in a mobility device, comprising:
a transmission antenna configured to transmit a transmission wave;
a reception antenna configured to receive a reflected wave that is the transmission wave having been reflected; and
a controller configured to detect an object, based on a transmission signal transmitted as the transmission wave and a reception signal received as the reflected wave,
wherein the controller is configured to output a detection result of an object approaching the mobility device when the mobility device is rearmost among multiple mobility devices traveling in a platoon.

12. An electronic device included in a mobility device, comprising:
a transmission antenna configured to transmit a transmission wave;
a reception antenna configured to receive a reflected wave that is the transmission wave having been reflected; and
a controller configured to detect an object, based on a transmission signal transmitted as the transmission wave and a reception signal received as the reflected wave,
wherein the controller is configured to skip outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.

13. A method for controlling an electronic device included in a mobility device, the method comprising:
transmitting a transmission wave from a transmission antenna;
receiving, from a reception antenna, a reflected wave that is the transmission wave having been reflected;
detecting an object, based on a transmission signal transmitted as the transmission wave and a reception signal received as the reflected wave; and
determining whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

14. A method for controlling an electronic device included in a mobility device, the method comprising:
transmitting a transmission wave from a transmission antenna;
receiving, from a reception antenna, a reflected wave that is the transmission wave having been reflected;
detecting an object, based on a transmission signal transmitted as the transmission wave and a reception signal received as the reflected wave; and
outputting a detection result of an object approaching the mobility device when the mobility device is rearmost among multiple mobility devices traveling in a platoon.

15. A method for controlling an electronic device included in a mobility device, the method comprising:
transmitting a transmission wave from a transmission antenna;
receiving, from a reception antenna, a reflected wave that is the transmission wave having been reflected;
detecting an object, based on a transmission signal transmitted as the transmission wave and a reception signal received as the reflected wave; and
skipping outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.

16. A program causing an electronic device included in a mobility device to:
transmit a transmission wave from a transmission antenna;
receive, from a reception antenna, a reflected wave that is the transmission wave having been reflected;
detect an object, based on a transmission signal transmitted as the transmission wave and a reception signal received as the reflected wave; and
determine whether the mobility device is rearmost among multiple mobility devices traveling in a platoon, in accordance with whether an object having a relative velocity of a predetermined threshold or less relative to the mobility device is detected at a predetermined distance behind the mobility device in a traveling direction of the mobility device.

17. A program causing an electronic device included in a mobility device to:
transmit a transmission wave from a transmission antenna;
receive, from a reception antenna, a reflected wave that is the transmission wave having been reflected;
detect an object, based on a transmission signal transmitted as the transmission wave and a reception signal received as the reflected wave; and
output a detection result of an object approaching the mobility device when the mobility device is rearmost among multiple mobility devices traveling in a platoon.

18. A program causing an electronic device included in a mobility device to:
transmit a transmission wave from a transmission antenna;
receive, from a reception antenna, a reflected wave that is the transmission wave having been reflected;
detect an object, based on a transmission signal transmitted as the transmission wave and a reception signal received as the reflected wave; and
skip outputting a detection result of an object having a relative velocity of a predetermined threshold or less relative to the mobility device at a predetermined distance behind the mobility device in a traveling direction of the mobility device when the mobility device is not rearmost among multiple mobility devices traveling in a platoon.
